Europäisches Patentamt

European Patent Office

Office européen des brevets

(11) Veröffentlichungsnummer: **0 044 478**
**B1**

(12) # EUROPÄISCHE PATENTSCHRIFT

(45) Veröffentlichungstag der Patentschrift:
27.11.85

(51) Int. Cl.⁴: **B 29 C 67/20**

(21) Anmeldenummer: 81105367.7

(22) Anmeldetag: 10.07.81

(54) Verfahren und Vorrichtung zum Herstellen von polymerem Schaumstoff.

(30) Priorität: 18.07.80 ES 493515

(43) Veröffentlichungstag der Anmeldung:
27.01.82 Patentblatt 82/4

(45) Bekanntmachung des Hinweises auf die Patenterteilung:
27.11.85 Patentblatt 85/48

(84) Benannte Vertragsstaaten:
BE DE FR GB IT NL

(56) Entgegenhaltungen:
DE - A - 1 778 569
DE - A - 2 221 617
DE - C - 1 207 072
US - A - 3 809 512
US - A - 4 069 285

(73) Patentinhaber: ICOA, S.A., Plaza San Vicente, Bilbao (ES)

(72) Erfinder: Ipinazar, Juan Maria Sanchez, C/Besaunz, no. 1, Yurre (Vizcaya) (ES)

(74) Vertreter: Gille, Christian, Dipl.-Ing. et al, Redies, Redies, Türk & Gille Bruckner Strasse 20, D-4000 Düsseldorf 13 (DE)

ACTORUM AG

# Beschreibung

Die Erfindung betrifft ein Verfahren zum Herstellen von Schaumstoffblöcken aus polymerem Schaum ohne Risse und Oberflächendefekte bei verbesserter Schaumbildung mit den Merkmalen des Oberbegriffes des Anspruches 1. Ausserdem betrifft die Erfindung eine Vorrichtung zum Durchführen des Verfahrens mit den Merkmalen des Oberbegriffes des Anspruches 5.

Zum kontinuierlichen Herstellen von Schaumstoffblöcken ist es bekannt (DE-A 2 221 617), eine aufschäumbare Mischung auf dem Boden eines im Querschnitt U-förmigen Schäumkanals zu verteilen, dessen Boden von einem kontinuierlich laufenden Förderband gebildet ist, wobei die Zugabe der Mischung durch einen Mischkopf erfolgt, der sich quer zur Laufrichtung des Förderbandes bewegen lässt. An den senkrecht hochstehenden Seitenwänden des Schäumkanals sind starre Führungsschienen vorgesehen, die von kontinuierlich bewegten Folien in Form von Schläuchen aus flexiblem Folienmaterial umhüllt und abgedeckt werden. Diese Schläuche werden an der oberen Kante der betreffenden Führungsschiene in dem Augenblick aufgeschnitten, wenn der Schaum seine maximale Höhe im Schäumkanal erreicht hat und die Folienbänder vom Schaumstoffblock entfernt werden sollen.

Die hierbei verwendeten Führungsschienen sind in sich verdreht, so dass auch die über sie geführten Schläuche eine Verdrehung erfahren, wodurch erhöhte Reibungskräfte auftreten. Ferner sind wegen der in sich verdrehten Ausführung der Führungsschienen Niederhalter erforderlich, welche die Reibung weiter erhöhen. Dementsprechend ist es notwendig, reissfeste und damit verhältnismässig dicke Folien für die Schläuche zu verwenden, die der auftretenden Verformung dehnungsfrei standhalten. Hierdurch wird nicht nur der Materialverbrauch der Folien erhöht, sondern auch eine Fehlerquelle für das Herstellen der Schaumstoffblöcke geschaffen, welche Risse oder Oberflächeneffekte hervorrufen kann.

Es ist weiterhin beim kontinuierlichen Herstellen von Schaumstoffblöcken in einem sich sozusagen bewegenden Schäumkanal bekannt (US-A 4 069 265), die die Seitenwände abdeckenden Schläuche beim Vorlauf aufzuspreizen. Allerdings werden die Schläuche hierbei erst am Ende der Zone des Anwachsens des Schaumstoffes von einem bügelförmigen Führungsstück vollständig aufgespreizt. Dadurch können sich Fehler im anwachsenden Schaumstoff, und zwar insbesondere im Bereich seiner Seitenwände, einstellen.

Der Erfindung liegt die Aufgabe zugrunde, das kontinuierliche Herstellen von Schaumstoffblöcken aus polymerem Schaum derart zu verbessern, dass mit einfacheren Mitteln eine bessere und gleichförmigere Schaumbildung ohne die Gefahr von Rissen oder Oberflächendefekten erzielt wird, so dass die hergestellten Schaumstoffblöcke auf ihrer Höhe und Breite optimal zur Weiterverarbeitung geeignet sind.

Diese Aufgabe wird gemäss der Erfindung mit einem Verfahren der eingangs genannten Gattung gelöst, welches die Merkmale des kennzeichnenden Teils des Anspruches 1 aufweist. Vorteilhafte Ausgestaltungen dieses Verfahrens und eine vorteilhafte Vorrichtung zum Durchführen dieses Verfahrens sind Gegenstand der Patentansprüche 2 bis 4. Die Vorrichtung zur Durchführung des Verfahrens ist im Anspruch 5 gekennzeichnet und wird gemäss den Ansprüchen 6 bis 9 weiter ausgestaltet.

Durch die Erfindung wird ein einfaches und betriebssicher durchzuführendes Verfahren und eine dieses Verfahren ausführende einfache Vorrichtung geschaffen. Wegen der einfachen Gestaltung der Führungsstücke können beispielsweise mehrere Sätze von Führungsstücken für verschieden breite Schläuche bereitgehalten werden, ebenso Führungsstücke mit verschiedenen Steigungswinkeln. Durch die flache Ausführung der Führungsstücke und die zum Schaumstoffstrang parallele Einlaufzone ist eine Umlenkung und Zusammenraffung der Schläuche, wie beim vorbekannten Stand der Technik erforderlich, nicht notwendig. Dementsprechend lässt sich die Reibung zwischen den Schläuchen und den Führungsstücken deutlich herabsetzen. Nach Beendigung des Wachstums des Schaumstoffstranges wird die schlauchförmige Folie aufgeschnitten und, da sie nunmehr ihre Aufgabe erfüllt hat, aus der Vorrichtung herausgeführt, da die seitliche Führung nunmehr von den einfachen Abdeckfolien übernommen werden kann.

Zur weiteren Erläuterung der Erfindung sind in der Zeichnung zwei Ausführungsbeispiele einer Vorrichtung zum kontinuierlichen Herstellen von Schaumstoffblöcken schematisch hergestellt, und zwar zeigt

Fig. 1 eine Seitenansicht einer ersten Ausführungsform dieser Vorrichtung,
Fig. 2 eine Draufsicht auf die Vorrichtung aus Fig. 1,
Fig. 3 eine Seitenansicht einer abgewandelten zweiten Ausführungsform der Vorrichtung,
Fig. 4 einen Querschnitt des Schäumkanals nach Linie A–A aus Fig. 3 und
Fig. 5 einen Querschnitt des Schäumkanals nach Linie B–B aus Fig. 1 bzw. Fig. 3.

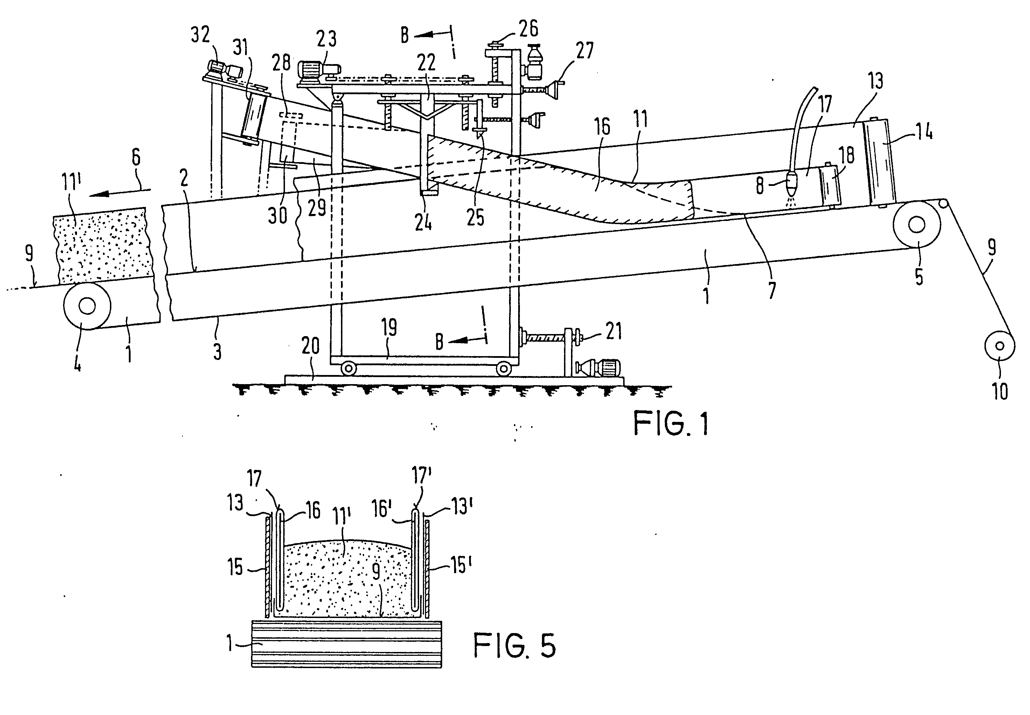

Gemäss Fig. 1 wird in einer Zone 7 auf den mit einem kontinuierlich von einer Vorratsrolle 10 ablaufenden Folienband 9 bedeckten Boden eines Schäumkanals eine schäumende Mischung aufgegeben, die aus einem Mischkopf 8 austritt, der sich quer über die Breite des Schäumkanals mittels nicht dargestellter Elemente bewegen lässt, wobei die Mischung mittels einer ebenfalls nicht dargestellten Vorrichtung dosiert wird.

Das Folienband 9 läuft auf ein endloses Förderband 1, welches mittels endständiger Rollen 4 und 5 so angetrieben wird, dass sich sein Obertrum 2 in Richtung eines Pfeiles 6 vom Eingangsende zum Ausgangsende der Vorrichtung «stromabwärts» bewegt. In dieser Richtung nimmt die ausschäumende Mischung 11 in Folge ihrer Expansion an Höhe zu, bis in einer Zone die maximale Höhe erreicht ist, welche von den Eigenschaften der Komponenten der ausschäumenden Mischung abhängig ist. Der fertige Schaumstoffblock 11' hat diese maximale Höhe.

In Fig. 1 ist ferner ein Folienband 13 dargestellt, welches den sich ausdehnenden Schaum an einer Seite des Schaumstoffblockes hält. Dieses Folienband 13 wird kontinuierlich von einer Vorratsrolle 14 abgezogen. In Fig. 1 ist keine der beiden Seitenwände des Schäumkanals dargestellt, auf denen die Folienbänder 13 bzw. 13' laufen. Ebensowenig sind in Fig. 1 die Elemente dargestellt, welche zum Einstellen den Neigungswinkel des Förderbandes 1, seines Obertrums 2, des Untertrums 3, der endständigen Umlenkrollen 4 und 5 und der beiden Seitenwände des im Querschnitt U-förmigen Schäumkanals zum Boden verändern können.

Die schäumende Mischung stützt sich beim Expandieren gegen zwei Seitenwände 15 und 15' ab und bildet auf diese Weise mittels der Folienbänder 9, 13 und 13' den Schaumstoffblock 11', wie insbesondere Fig. 5 zeigt. Gemäss Fig. 1 stützt sich die schäumende Mischung in der ersten Phase der Expansion gegen zwei zusätzliche starre glatte seitliche Führungsschienen 16 (in Fig. 1 schraffiert dargestellt) und 16' ab, wie auch Fig. 5 zeigt. Der sich bildende Schaumstoff stützt sich jedoch nicht unmittelbar auf den Führungsschienen 16 und 16' ab, sondern über eine flexible Abdeckfolie in Form eines Schlauches 17 bzw. 17', wobei die beiden Schläuche 17 und 17' kontinuierlich von jeweils einer Vorratsrolle 18 bzw. 18' abgezogen werden. Die beiden zusätzlichen seitlichen Führungsschienen 16 und 16' sind glatt und starr ausgebildet und parallel zu den Seitenwänden 15 bzw. 15' des Schäumkanals in diesem angeordnet und haben eine gewölbte Form. Über ihre Aussenseite gleitet, sie umhüllend, jeweils einer der als seitliche Abdeckung dienenden Schläuche 17 bzw. 17' (Fig. 1 und 5).

Je nach Zusammensetzung der schäumenden polymeren Mischung wird es für die verschiedenen durch die Expansion erreichbaren Aufschäumprofile zweckmässig sein, die in den Schäumkanal hineinragenden zusätzlichen seitlichen Führungsschienen 16 und 16' mehr oder weniger dicht an der Zone 7 anzuordnen, wo der Mischkopf 8 die schäumende polymere Mischung aufgibt. Um dies zu erreichen, sind die seitlichen Führungsschienen 16 und 16' an einem Rahmen 19 befestigt, der auf in der gewünschten Höhe montierten Schienen 20 abgestützt ist und mittels eines Schneckentriebes 21, 21' stufenlos «stromaufwärts» oder «stromabwärts» entlang dem Schäumkanal verfahren werden kann. In einigen Fällen ist es notwendig, zur Anpassung des von den Schläuchen 17 und 17' begrenzten Aufschäumprofils an das vom schäumenden Material tatsächlich erreichte Aufschäumprofil den Neigungswinkel zwischen dem Obertrum 2 des Förderbandes 1 und den Führungsschienen 16 und 16' zu verändern. Dies erreicht man mittels eines Schneckentriebes 23 durch Anheben bzw. Absenken. Ausserdem ist vorgesehen, falls erforderlich, die seitlichen Führungsschienen 16 und 16' gegen andere Führungsschienen unterschiedlicher Krümmung auszutauschen, indem Halterungen 22 vom Rahmen 19 gelöst und neue Halterungen angebracht werden, um eine Anpassung an ein anderes Schaumstoffprofil zu erreichen.

Nachdem von der aufschäumenden polymeren Mischung das dem Aufschäumprofil der Schläuche 17 und 17' entsprechende spezifische Aufschäumprofil erreicht worden ist, müssen die die seitlichen Führungsschienen 16 und 16' abdeckenden Schläuche 17 und 17' entfernt werden. Zu diesem Zweck sind am verfahrbaren Rahmen 19 auf jeder Seite des Schäumkanals zwei Messer 24 und 25 angebracht, von denen in Fig. 1 nur jeweils eines dargestellt ist. Diese Messer 24 und 25 können mittels eines Stellgetriebes 26 gehoben und gesenkt und mittels eines weiteren Stellgetriebes 27 in Längsrichtung des Schäumkanals verstellt werden. Die Messer 24 und 25 schneiden den Schlauch 17 bzw. 17' an der oberen und unteren Kante in zwei parallele Folien auf, nämlich in eine äussere Folie 28 und eine innere Folie 29, die sich vom Schaumstoffblock 11' abtrennen lässt. Beide Folien 28 und 29 werden jeweils auf eine Rolle 30 bzw. 31 aufgerollt, zu welchem Zweck ein Antrieb 32 vorgesehen ist.

Auf diese Weise wird der Schaumstoffblock 11' in der Zone, in der er seine maximale Höhe erreicht hat, von den Schläuchen 17 und 17' befreit, die mit zunehmender Höhe des ausschäumenden Schaumstoffes nach oben wandern. Um das Gleiten der Schläuche 17 und 17' auf den Führungsschienen 16 bzw. 16' und das Ablösen der inneren Folie 29 vom Schaumstoffblock 11' zu erleichtern, können die Führungsschienen 16 und 16' beispielsweise aus geschliffenem Stahl bestehen, während der Schlauch 17 beispielsweise aus Polyäthylen-Folie hergestellt ist.

Nicht gezeigt sind in Fig. 1 die Einrichtungen zum Abtrennen und Aufrollen der die Seitenwände des Schäumkanals abdeckenden Folienbänder 13 und 13' und des über das Obertrum 2 des Förderbandes 1 laufenden Folienbandes 9.

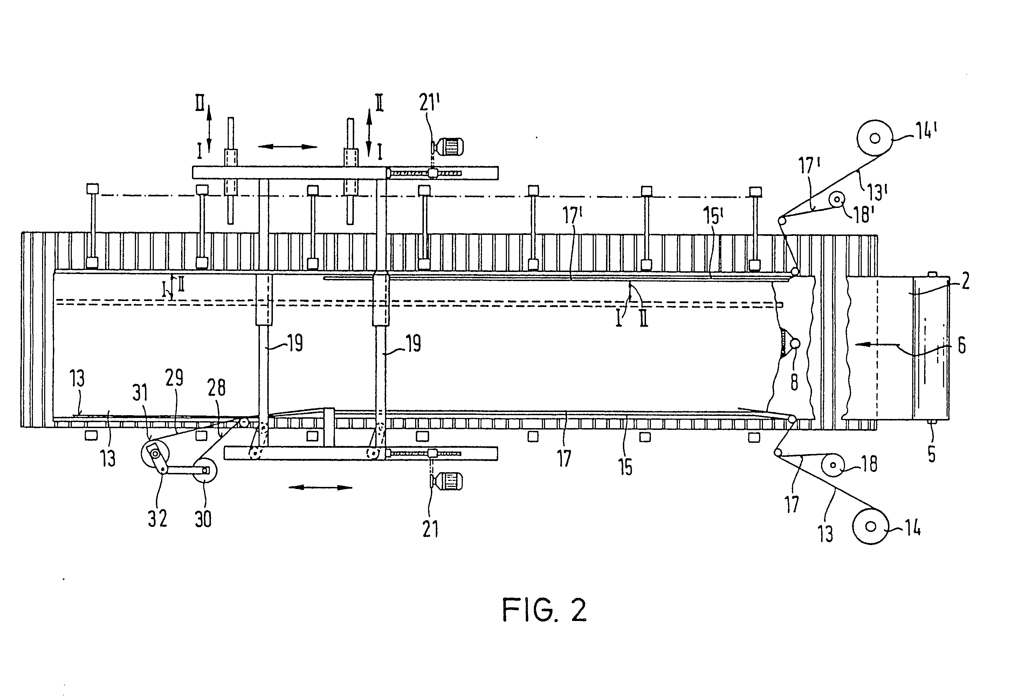

In Fig. 2 ist zu erkennen, wie die Breite des Schaumstoffblockes 11' zwischen den Pos. I und II vergrössert bzw. verkleinert werden kann, indem die Seitenwand 15' mittels eines nicht dargestellten Antriebes seitlich gegenüber der feststehenden Seitenwand 15 verschoben wird. Mit der Seitenwand 15' wird die Führungsschiene 16', über welche der Schlauch 17' läuft, am Rahmen 19 in Richtung zur Seitenwand 15 bzw. von dieser weg verschoben.

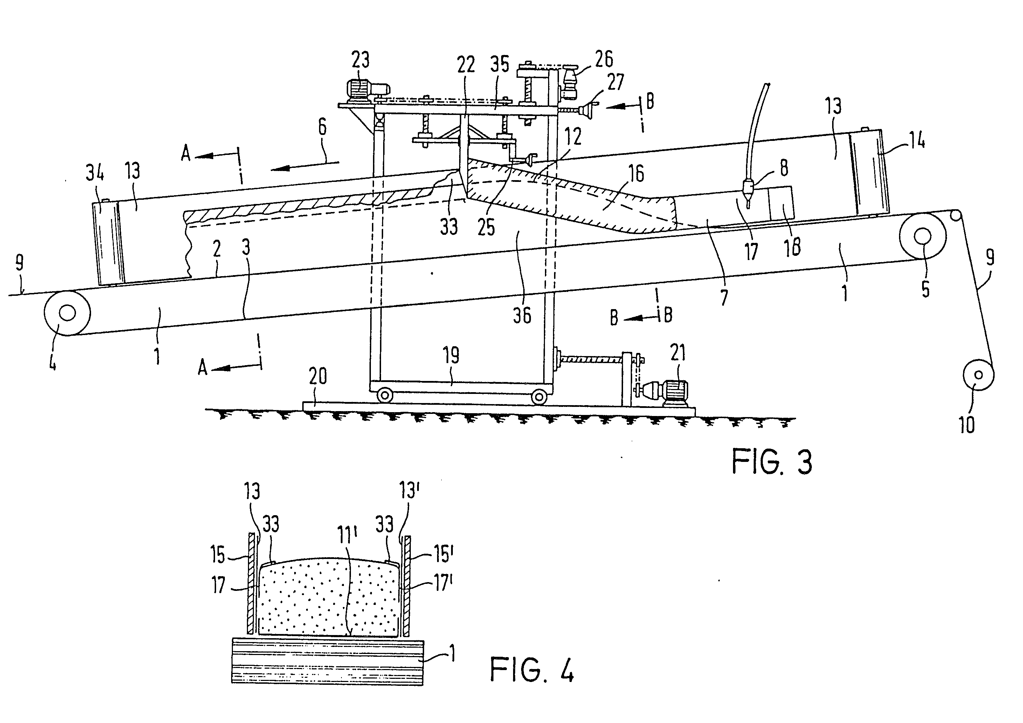

Bei der in Fig. 3 dargestellten abgewandelten Ausführungsform wird der über die seitliche Führungsschiene 16, die schraffiert dargestellt ist, laufende Schlauch 17 an seinem oberen Rand mittels eines Messers 25 aufgeschnitten, welches sich an einer anstellbaren Halterung 35 in der Zone 12 befindet, wo der Schaumstoffblock 11′ seine grösste Höhe erreicht hat. «Stromaufwärts» davon hat der quer zum Förderband 1 bewegliche Mischkopf 8 schäumende polymere Mischung in der Zone 7 auf das Folienband 9 auf dem Obertrum 2 des Förderbandes 1 aufgebracht. Um das tatsächlich erreichte Aufschäumprofil des Schaumstoffblockes 1 und das zwischen den Führungsschienen 16 und 16′ mögliche Aufschäumprofil auszugleichen, wird die Lage der seitlichen Führungsschienen 16 und 16′ gegenüber der Zone 7 durch Verschieben des Rahmens 19 auf den Schienen 20 mittels des Antriebes 21 in Längsrichtung des Schäumkanals «stromaufwärts» oder «stromabwärts» entsprechend verändert.

Der Neigungswinkel der seitlichen Führungsschienen 16 und 16′ zum Boden des Schäumkanals bzw. zum Obertrum 2 des endlosen Förderbandes 1 und die Höhenlage der Führungsschienen 16 und 16′ gegenüber dem Kanal werden mittels der Antriebe 23, 26 und 27 korrigiert. Wenn das tatsächliche Aufschäumprofil des Schaumstoffblockes 11′ sich nicht dem möglichen Aufschäumprofil zwischen den seitlichen Führungsschienen 16 und 16′ anpasst, werden diese Führungsschienen von der Halterung 22 des Rahmens 19 gelöst und durch andere seitliche Führungsschienen mit geeignetem Profil bzw. geeigneterer Form ersetzt.

Nachdem der von der Vorratsrolle 18 kontinuierlich zugeführte Schlauch 17 bzw. 17′ vom Messer 25 aufgeschnitten worden ist, legt sich der durch diesen Schnitt entstandene überstehende Teil 33 vorübergehend auf den Schaumstoffblock, wie Fig. 4 zeigt. Fig. 4 ist ein Schnitt nach Linie A–A der Fig. 3, während die Fig. 5 einen Schnitt nach Linie B–B sowohl der Fig. 1 als auch der Fig. 3 zeigt. Soweit bei beiden Ausführungsformen gleiche Teile vorgesehen sind, werden auch gleiche Bezugsziffern verwendet.

Zusammenfassend ist für beide Ausführungsformen folgendes festzustellen:

Die Abdeckung der Seitenwände 15 und 15′ wird in Form eines Folienbandes 13 bzw. 13′ von einer Vorratsrolle 14 bzw. 14′ kontinuierlich zugeführt und gleitet zwischen der Innenseite jeder Seitenwand 15 bzw. 15′ und der Aussenseite des Schlauches 17 bzw. 17′, der mit der betreffenden seitlichen Führungsschiene 16 bzw. 16′ in Kontakt steht. In einer unter den Führungsschienen 16 bzw. 16′ befindlichen Zone 36 stehen die Folienbänder 13 bzw. 13′ mit dem Schaumstoffblock 11′ in Kontakt. Das Folienband 13 bzw. 13′ bleibt in diesem unteren Bereich des Schaumstoffblockes 11′ an diesem haften und wird von einer in einer zweckmässigen Zone befindlichen Rolle 34 aufgewickelt. In Fig. 3 sind weder die Einrichtungen zum Einstellen der Neigung des Förderbandes 1 und der Seitenwände 15, 15′ zum Boden noch der Antrieb für das Förderband sowie das Abtrennen des Schaumstoffblockes von dem unteren Abdeckband 9 dargestellt. Auch die Einrichtung zum Ablösen des vorübergehend auf dem Schaumstoffblock 11′ liegenden überstehenden Teils 33 des Schlauches 17 bzw. 17′ ist nicht dargestellt.

**Patentansprüche**

1. Verfahren zum kontinuierlichen Herstellen von Schaumstoffblöcken (11′) aus polymerem Schaum ohne Risse und Oberflächendefekte bei verbesserter Schaumbildung, bei dem eine aufschäumbare Mischung auf den Boden eines im Querschnitt U-förmigen Schäumkanals verteilt wird, dessen Boden mit einem kontinuierlich von einer Vorratsrolle (10) ablaufenden Folienband (9) abgedeckt wird, wobei die Zugabe der Mischung durch einen Mischkopf (8) erfolgt, der sich quer zur Laufrichtung des auf einer kontinuierlichen Transportvorrichtung in Form eines Förderbandes (1) liegenden Folienbandes (9) bewegen lässt, wobei ferner die aufschäumende Masse nahe den Längskanten des den Boden des Schäumkanals bildenden endlosen Förderbandes (1) von zwei senkrecht hochstehenden Seitenwänden (15, 15′) und im Aufschäumbereich von an den Seiten des Schäumkanals vorgesehenen starren Führungsschienen (16, 16′) abgestützt wird, die von kontinuierlich bewegten umhüllenden Folien in Form von Schläuchen (17, 17′) aus flexiblem Folienmaterial abgedeckt werden, und wobei die die Führungsschienen (16, 16′) umhüllenden Schläuche (17, 17′) an der oberen Kante der betreffenden Führungsschiene in dem Augenblick aufgeschnitten werden, da der Schaum seine maximale Höhe erreicht hat und die dadurch gebildeten Folienbänder vom Schaumstoffblock (11′) entfernt werden, dadurch gekennzeichnet, dass zusätzlich ebene Folienbänder (13, 13′) kontinuierlich über die Seitenwände (15, 15′) hinweggeführt werden, dass die Schläuche (17, 17′) mit einer den Führungsschienen (16, 16′) angepassten Breite unverdreht über die plattenartig und in der Führungsebene abgewinkelt gestalteten, mit einem dem Wachsen des Schaumstoffes angepassten Neigungswinkel ansteigenden, eine gleichbleibende Breite aufweisenden Führungsschienen (16, 16′) gleiten und dass im Bedarfsfall durch gegenseitiges Annähern oder Auseinanderfahren der Seitenwände (15, 15′) einschliesslich der Führungsschienen (16, 16′) die Breite des kontinuierlich herzustellenden Schaumstoffblockes (11′) übergangslos geändert wird.

2. Verfahren nach Anspruch 1, dadurch gekennzeichnet, dass das von den seitlichen Führungsschienen (16, 16′) zur Verfügung gestellte Abstützprofil dem Aufschäumprofil des Schaumes, das sich entsprechend der Zusammensetzung der verwendeten schäumenden Mischung bildet, angepasst wird, indem die an einem auf Schienen (20) verfahrbaren Rahmen (19) angeordneten Führungsschienen (16, 16′) in Laufrichtung des sich bildenden Schaumstoffblocks (11′) oder in entgegengesetzter Richtung entlang dem Schäumkanal verfahren werden und/oder indem der Winkel, in welchem die Führungsschienen (16, 16′) zum Boden des U-förmigen Schäumkanals stehen, verändert wird und/oder indem die Führungsschienen (16, 16') gegen andere mit unterschiedlicher Abwinklung ausgetauscht und/oder indem die Führungsschienen (16, 16') gegenüber dem Schäumkanal angehoben bzw. abgesenkt werden.

3. Verfahren nach Anspruch 2, dadurch gekennzeichnet, dass Antriebe (21, 23, 26, 27, 32) vorgesehen sind, um das den Boden des U-förmigen Schäumkanals bildende Förderband (1) kontinuierlich anzutreiben und damit eine gleichmässige Verteilung der schäumenden Mischung zu erreichen, um die Seitenwände (15, 15') des Schäumkanals, wenn sie die Form von endlosen Förderbändern haben, zu bewegen und damit die auf ihnen zur Abdeckung liegenden Folienbänder (13, 13') vorwärts zu bewegen, um ferner den verfahrbaren Rahmen (19), der die Führungsschienen (16, 16') trägt, auf den Schienen (20) zu verfahren und damit das von den Führungsschienen zur Verfügung gestellte Abstützprofil an das Aufschäumprofil anzupassen, um den Winkel zwischen den seitlichen Führungsschienen (16, 16') und dem Boden des U-förmigen Schäumkanals zu verändern, um die seitlichen Führungsschienen (16, 16') gegenüber dem Schäumkanal und ausserdem die Schneidelemente (24, 25) nach oben oder unten zu verfahren, um die durch das Aufschneiden der Schläuche (17, 17') gebildeten Folienbänder (28, 29) zu entfernen und aufzurollen und um die beweglichen Seitenwände (15, 15') zum Verschmälern oder Verbreitern des sich durch das Aufschäumen bildenden Schaumstoffblocks (11') zusammen mit den seitlichen Führungsschienen (16, 16') aufeinander zu oder voneinander weg fahren zu können.

4. Verfahren nach einem der Ansprüche 1 bis 3, dadurch gekennzeichnet, dass die Schaumstoffblöcke (11') kontinuierlich aus aufschäumendem Polyurethan gebildet werden.

5. Vorrichtung zum Durchführen des Verfahrens nach einem der Ansprüche 1 bis 4, mit einem langgestreckten im Querschnitt U-förmigen Schäumkanal, mit einem als endloses Förderband (1) ausgebildeten Boden, über den eine bandförmige Abdeckfolie (9) läuft, und mit senkrecht hochstehenden Seitenwänden (15, 15') sowie mit einem im vorderen Bereich (7) des Schäumkanals quer über dessen Breite seitlich hin- und herbewegbaren Kopf (8) zum dosierten Aufgeben einer auszuschäumenden polymeren Kunststoffmischung, mit jeweils an der Innenseite der Seitenwände (15, 15') angeordneten Führungsschienen (16, 16'), die unmittelbar hinter der Aufgabezone (7) für die auszuschäumende Mischung nahe dem Boden (1) des Schäumkanals beginnen, und mit über die Führungsschienen (16, 16') kontinuierlich hinweggeführten schlauchförmigen Abdeckfolien (17, 17'), sowie mit einer Vorrichtung zum Aufschneiden der Schläuche (17, 17') jeweils im Bereich der hinteren oberen Kante der Führungsschiene (16, 16') und mit Mitteln zum Entfernen der dadurch gebildeten Folienbänder vom Schaumstoffblock (11'), dadurch gekennzeichnet, dass über die Seitenwände (15, 15') laufende bandförmige Abdeckfolien (13, 13') vorgesehen sind, dass die Führungsschienen (16, 16') plattenartig mit gleichbleibender Breite gestaltet und nach anfänglichem Verlauf parallel zum Boden des Schäumkanals mit einer dem Wachsen des Schaumstoffs während des Aufschäumvorganges angepassten Winkelneigung nach hinten ansteigen und über der Oberkante der Seitenwände (15, 15') enden, dass die Schläuche (17, 17') eine den Führungsschienen (16, 16') angepasste Breite haben und dass Mittel vorgesehen sind, um die Seitenwände (15, 15') einschliesslich der Führungsschienen (16, 16') zur übergangslosen Änderung der Breite des herzustellenden Schaumstoffblocks (11') relativ zueinander zu verschieben.

6. Vorrichtung nach Anspruch 5, dadurch gekennzeichnet, dass die Führungsschienen (16, 16') in ihrer Neigung zum Boden (1) des Schäumkanals und in ihrer Lage entlang dem Schäumkanal verstellbar sind.

7. Vorrichtung nach Anspruch 5 oder 6, dadurch gekennzeichnet, dass die Führungsschienen (16, 16') auswechselbar angebracht sind.

8. Vorrichtung nach einem der Ansprüche 5 bis 7, dadurch gekennzeichnet, dass die Führungsschienen verstellbar und auswechselbar an einem Rahmen (19) angeordnet sind, der in Längsrichtung des Schäumkanals verfahrbar ist.

9. Vorrichtung nach einem der Ansprüche 5 bis 8, dadurch gekennzeichnet, dass die als Abdeckfolien für die Führungsschienen (16, 16') dienenden Schläuche (17, 17') kontinuierlich von einer Vorratsrolle (18, 18') ablaufen und nach dem Aufschneiden am hinteren Ende der Führungsschienen (16, 16') und Abziehen vom Schaumstoffblock (11') auf Rollen (30, 31) aufgewickelt werden.

**Claims**

1. Method for the continuous production of foam blocks (11') from polymer foam, the surface of which is free of cracks and defects with improved foam forming, in which a foaming composition is distributed on the bottom of a U-section foaming channel, the bottom of which is covered by a foil strip (9) continuously fed from a storage reel (10), the feeding of the composition being carried out through a mixer head (8) laterally movable to the running direction of a foil strip (9) resting on a continuous transport device having the form of a conveyor belt (1), the foaming composition being supported adjacent the longitudinal edges of the endless conveyor belt (1) forming the bottom of the foaming channel by a pair of vertically extending lateral walls (15, 15'), and being further supported in the foaming area by rigid guide rails (16, 16') provided at the sides of the foaming channel, said rigid guide rails being enclosed by continuously moving envelope foils in the form of hoses (17, 17') made of flexible foil material, said hoses (17, 17') enclosing the guide rails (16, 16') being cut open at the upper edge of the corresponding guide rail at the instant when the foam has reached its maximum height and the thus formed foil strips are removed from the foam block (11'), characterized in that additionally flat foil bands (13, 13') are continuously guided over the side walls (15, 15') and that hoses (17, 17') untorsionally slide in a width adapted to guide rails (16, 16') over in the guiding plane angularly provided plate-like guide rails (16, 16') mounting at an inclination angle adapted to the growth of the foam block, said guide rails (16, 16') being of steady width, and that in case of necessity the width of the continuously produced foam block (11') is progressively changed by mutually approaching or separating lateral walls (15, 15') and guide rails (16, 16').

2. Method as defined in claim 1, characterized in that the supporting profile provided by the lateral guide rails (16, 16') is adapted to the foaming profile of the foam forming in compliance with the composition of the used foaming mixture by moving guide rails (16, 16') provided on a frame (19) slidable on rails (20) in the moving direction of the forming foam block (11') or in opposite direction along the foaming channel and/or by changing the angle of guide rails (16, 16') with respect to the U-section foaming channel, and/or by exchanging guide rails (16, 16') against other rails with different inclination, and/or by rising or lowering guide rails (16, 16') with respect to the foaming channel.

3. Method as defined in claim 2, characterized in that there are provided drive means (21, 23, 26, 27, 32) for continuously driving conveyor belt (1) forming the bottom of the U-section foaming channel in order to obtain thereby uniform distribution of the foaming composition, for moving the lateral walls (15, 15') of the foaming channel when they are designed as endless conveyor belts thus moving frontward foil strips (13, 13') covering the latter, and for further moving slidable frame (19) supporting guide rails (16, 16') on rails (20) thus adapting the supporting profile provided by the guide rails to the foaming profile, for changing the angle between lateral guide rails (16, 16') and the bottom of the U-section foaming channel, for moving lateral guide rails (16, 16') with respect to the foaming channel and further cutting elements (24, 25) upwards or downwards, for removing and reeling-up foil strips (28, 29) obtained by cutting hoses (17, 17') and for moving movable side walls (15, 15') together with lateral guide rails (16, 16') for narrowing and enlarging the foam block (11') formed by the foaming operation.

4. Method as defined in either of claims 1 to 3, characterized in that foam block (11') are continuously formed from foaming polyurethane.

5. Apparatus for executing the method as defined in either of claims 1 to 4, comprising an elongated U-section foaming channel, comprising a bottom designed as endless conveyor belt (1) over which runs a strip-shaped covering foil (9), and comprising vertically extending lateral walls (15, 15') and a mixer head (8) reciprocable in the front portion (7) over the width of the foaming channel for dosed application of a foamable polymer composition, and comprising guide rails (16, 16') provided at the inside of lateral walls (15, 15') and beginning immediately behind the loading area (7) for the foaming composition near bottom (1) of the foaming channel, and comprising hose-like covering foils (17, 17') continuously running over guide rails (16, 16'), further comprising a device for cutting hoses (17, 17') in the area of the rear upper edge of guide rails (16, 16') and comprising means for removing the thus formed foil strips from foam block (11'), characterized in that there are provided strip-shaped covering foils (13, 13') running over side walls (15, 15'), that guide rails (16, 16') are designed as plates of equal width rearwardly rising after initial extension parallel to the bottom of the foaming channel at an inclination adapted to the growth of the foam during the foaming operation, and ending above the upper edge of side walls (15, 15'), that hoses (17, 17') have a width adapted to guide rails (16, 16') and that there are provided means for relatively moving towards one another side walls (15, 15') including guide rails (16, 16') for progressively changing the width of the foam block (11') to be produced.

6. Apparatus as defined in claim 5, characterized in that guide rails (16, 16') are adjustable in their inclination with respect to bottom (1) of the foaming channel and in their position along the foaming channel.

7. Apparatus as defined in either of claims 5 or 6, characterized in that guide rails (16, 16') are exchangeable.

8. Apparatus as defined in either of claims 5 to 7, characterized in that the guide rails are provided adjustably and exchangeably at a frame (19) movable in longitudinal direction of the foaming channel.

8. Apparatus as defined in either of claims 5 to 8, characterized in that hoses (17, 17') serving as covering foils for guide rails (16, 16') are continuously reeled-off from a storage reel (18, 18') and reeled up on rolls (30, 31) after cutting open at the rear end of guide rails (16, 16') and withdrawal from foam block (11').

## Revendications

1. Procédé de fabrication continue de blocs de mousse (11') à partir d'une mousse polymère sans fissures et défauts de surface avec amélioration de la formation de mousse, suivant lequel un mélange expansible est réparti sur le fond d'un canal de production de mousse à section en forme de U, dont le fond est recouvert d'une bande de feuille (9) dévidée de façon continue d'une bobine d'alimentation (10), l'introduction du mélange étant assurée par une tête mélangeuse (8) qui peut se déplacer perpendiculairement à la direction de déplacement de la bande de feuille (9) placée sur un dispositif de transport continu se présentant sous la forme d'une bande transporteuse (1), et en outre la masse expansible étant soutenue à proximité des bords longitudinaux de la bande transporteuse sans fin (1) constituant le fond du canal de formation de mousse par deux parois latérales orientées verticalement (15, 15'), et, dans la zone de formation de mousse, par des rails rigides de guidage (16, 16') placés sur les côtés du canal de formation de mousse et qui sont recouverts par des feuilles d'enveloppement sous forme de tuyaux souples (17, 17') en matière flexible qui sont déplacées de façon continue, les tuyaux souples (17, 17') enveloppant les rails de guidage (16, 16') étant sectionnés sur le bord supérieur du rail de guidage correspondant au moment où la mousse a atteint sa hauteur maximale et les bandes de feuilles ainsi formées étant enlevées du bloc de mousse (11'), caractérisé en ce qu'additionnellement des bandes de feuilles planes (13, 13') sont amenées de façon continue sur les parois latérales (15, 15'), en ce que les tuyaux souples (17, 17'), d'une largeur adaptée aux rails de guidage (16, 16'), glissent sans torsion sur les rails de guidage (16, 16') en forme de plaques, pourvus d'un profil coudé dans le plan de guidage, présentant une largeur constante et inclinés vers le haut d'un angle d'inclinaison adapté à l'expansion de la mousse, et en ce qu'en cas de besoin, la largeur du bloc de mousse (11') à fabriquer de façon continue est modifiée graduellement par rapprochement ou écartement mutuel des parois latérales (15, 15'), y compris les rails de guidage (16, 16').

2. Procédé selon la revendication 1, caractérisé en ce que le profil d'appui qui est établi par les rails de guidage (16, 16') est adapté au profil de formation de la mousse, qui est créé en correspondance à la composition du mélange de formation de mousse utilisé, par le fait que les rails de guidage (16, 16'), disposés sur un châssis (19) mobile sur les rails (20), sont déplacés dans la direction de déplacement du bloc de mousse en formation (11') ou bien dans une direction opposée le long du canal de formation de mousse et/ou par le fait que l'angle d'inclinaison des rails de guidage (16, 16') par rapport au fond du canal de production de mousse en forme de U est modifié et/ou par le fait que les rails de guidage (16, 16') sont remplacés par d'autres rails ayant une inclinaison différente et/ou par le fait que les rails de guidage (16, 16') sont relevés ou descendus par rapport au canal de formation de mousse.

3. Procédé selon la revendication 2, caractérisé en ce qu'il est prévu des entraînements (21, 23, 26, 27, 32), pour faire avancer de façon continue la bande transporteuse (1) constituant le fond du canal de production de mousse en forme de U et pour obtenir ainsi une répartition uniforme du mélange de formation de mousse, pour déplacer les parois latérales (15, 15') du canal de formation de mousse lorsqu'elles ont la forme de bandes transporteuses sans fin et pour faire ainsi avancer les bandes de feuilles (13, 13') venant les recouvrir, pour faire en outre avancer le châssis mobile (19), qui porte les rails de guidage (16, 16') sur les rails (20) et pour adapter ainsi le profil de soutien établi par les rails de guidage au profil de formation de mousse, pour modifier l'angle entre les rails de guidage latéral (16, 16') et le fond du canal de formation de mousse en forme de U, pour déplacer vers le haut ou vers le bas les rails de guidage latéral (16, 16') par rapport au canal de formation de mousse et en outre les éléments de sectionnement (24, 25), pour enlever et enrouler les bandes de feuilles (28, 29) qui sont créées par sectionnement des tuyaux souples (17, 17') et pour rapprocher ou écarter mutuellement, en même temps que les rails de guidage latéral (16, 16'), les parois latérales mobiles (15, 15') en vue d'un rétrécissement ou d'un élargissement du bloc de mousse (11') en cours de formation.

4. Procédé selon une des revendications 1 à 3, caractérisé en ce que les blocs de mousse (11') sont formés de façon continue à partir de polyuréthane en expansion.

5. Dispositif pour la mise en œuvre du procédé selon une des revendications 1 à 4, comportant un canal allongé de production de mousse à section en forme de U, constitué par un fond se présentant sous la forme d'une bande transporteuse sans fin (1) sur laquelle se déplace une feuille de recouvrement en forme de bande (9), et des parois latérales (15, 15') orientées verticalement vers le haut, ainsi qu'une tête (8), déplaçable alternativement dans une zone avant (7) du canal de formation de mousse perpendiculairement à sa largeur en vue de l'admission dosée d'un mélange de matière plastique polymère pouvant former de la mousse, des rails de guidage (16, 16') disposés respectivement sur le côté intérieur des parois latérales (15, 15') et qui commencent immédiatement en arrière de la zone d'admission (7) du mélange de formation de mousse à proximité du fond (1) du canal de formation de mousse, ainsi que des feuilles de revêtement (17, 17') en forme de tuyaux souples qui sont guidées de façon continue sur les rails de guidage (16, 16'), et un dispositif de sectionnement des tuyaux souples (17, 17') respectivement dans la zone du bord arrière supérieur des rails de guidage (16, 16') et des moyens pour enlever les bandes de feuilles ainsi formées du bloc de mousse (11'), caractérisé en ce qu'il est prévu des feuilles de recouvrement (13, 13') en forme de bandes se déplaçant sur les parois latérales (15, 15'), en ce que les rails de guidage (16, 16'), agencés en forme de plaques d'une largeur constante, sont disposés, après un tronçon initial parallèle au fond du canal de formation de mousse, de façon à être inclinés vers l'arrière et vers le haut avec un angle d'inclinaison qui est adapté à l'expansion de la mousse pendant le processus de formation de mousse et qui se termine au-dessus du bord supérieur des parois latérales (15, 15'), en ce que les tuyaux souples (17, 17') ont une largeur adaptée aux rails de guidage (16, 16') et en ce qu'il est prévu des moyens pour déplacer relativement les parois latérales (15, 15'), y compris les rails de guidage (16, 16'), en vue d'une modification graduelle de la largeur du bloc de mousse (11') à fabriquer.

6. Dispositif selon la revendication 5, caractérisé en ce que les rails de guidage (16, 16') sont réglables en ce qui concerne leur inclinaison par rapport au fond (1) du canal de formation de mousse et leur position le long du canal de formation de mousse.

7. Dispositif selon la revendication 5 ou 6, caractérisé en ce que les rails de guidage (16, 16') sont disposés de façon amovible.

8. Dispositif selon une des revendications 5 à 7, caractérisé en ce que les rails de guidage sont disposés de façon réglable et amovible sur un châssis (19), qui est déplaçable dans la direction longitudinale du canal de formation de mousse.

9. Dispositif selon une des revendications 5 à 8, caractérisé en ce que les tuyaux souples (17, 17') servant de feuilles de recouvrement pour les rails de guidage (16, 16') sont dévidés de façon continue d'une bobine d'alimentation (18, 18') et, après leur sectionnement à l'extrémité arrière des rails de guidage (16, 16') et leur écartement du bloc de mousse (11'), ils sont enroulés sur des bobines (30, 31).

0 044 478

FIG. 1

FIG. 5

FIG. 2

FIG. 3

FIG. 4